# DEMANDE DE BREVET EUROPEEN

(11) **EP 0 542 603 A1**
(43) Date de publication de la demande: **19.05.1993**
(21) Numéro de dépôt: 92402993.7
(22) Date de dépôt: 05.11.1992
(51) Int. Cl.: G01N 21/77, G02B 6/16

(54) **Capteur à fibre optique pour la mesure d'un paramètre, procédé d'évaluation d'un tel paramètre, et application du capteur à la mesure d'un gaz**

(30) Priorité: 12.11.1991 FR 9113887
(71) Demandeur: GAZ DE FRANCE (SERVICE NATIONAL), F-75017 Paris (FR)
(72) Inventeur: Di Bin, Philippe, F-87100 Limoges (FR); Facq, Paul, F-87350 Panazol (FR); Pichery, Thierry, F-95270 Saint Martin du Tertre (FR)
(74) Mandataire: Lerner, François

(57) **Abrégé**

Il s'agit d'un système de capteurs à fibre(s) optique(s) comprenant au moins une telle fibre pour la mesure d'un paramètre physique ou chimique sensible à l'évolution d'un environnement (E) au sein duquel le capteur est placé, ladite fibre comprenant une gaine (3), un coeur (5) entouré par cette gaine, un axe (7) avec une longueur dans la direction de cet axe, et, localement sur sa longueur, des parties (9) avec des variations d'épaisseur optique formant un réseau optique de diffraction (10) , au moins une partie de la gaine (3) comprenant dans sa constitution un matériau actif dont les propriétés optiques varient en fonction de l'évolution dudit paramètre (P) au sein de l'environnement où est placé le capteur. Le matériau actif peut être un hétéropolysiloxane.

Pour analyser l'évolution du paramètre, une analyse réflectométrique peut être prévue.

Application notamment à la détermination de la teneur en gaz d'un milieu.

## Description

L'invention concerne un capteur, et plus particulièrement un capteur intrinsèque à fibre(s) optique(s). Une application privilégiée, plus particulièrement envisagée, de ce capteur est de l'utiliser en tant que capteur de gaz. Toutefois, la définition du capteur de l'invention l'autorise tout à fait à être utilisé en tant par exemple que capteur de température, voire de tout paramètre physique ou chimique qui serait sensible à l'évolution de l'environnement au sein duquel sera placé le capteur.

Notamment dans le domaine des détecteurs ou capteurs optiques de gaz, on sait aujourd'hui que leurs avantages autorisent une maintenance réduite et un fonctionnement en atmosphère dénuée d'oxygène, leur sélectivité et leur résistance aux gaz corrosifs ayant par ailleurs fait leur succès dans un certain nombre d'applications de haute technologie.

Les appareils tout optique, et plus particulièrement les capteurs à fibre(s) optique(s), simples ou en réseaux, présentent de surcroît les avantages suivants : sécurité électrique intrinsèque (pas de nécessité d'un isolant électrique), possibilité de mesures distribuées (association en séries, continûment sensibles par exemple), insensibilité aux perturbations électromagnétiques, poids et encombrement réduits.

Avec de tels capteurs, la détection optique notamment d'un gaz se fait habituellement dans une cellule, ouverte ou fermée, traversée par une raie de lumière de longueur d'onde déterminée interagissant avec le gaz à détecter, suivant le principe de l'absorption spectroscopique. La différence d'intensité entre le signal lumineux à l'entrée et à la sortie de la cellule donne une indication sur la concentration de ce gaz.

D'autres recherches portent enfin sur des capteurs chimiques à fibres optiques, n'utilisant pas de cellule de détection. Au brevet EP-A- 0275275 on trouve ainsi un exemple de capteur à fibre optique pour la détection d'un paramètre physique ou chimique, ou encore d'une substance, à l'aide de l'association d'au moins une couche sélective disposée sur une surface de la fibre et d'un réseau optique de diffraction dont cette même fibre est pourvue, la couche sélective comprenant, dans sa constitution, un matériau organique optiquement conducteur dont les propriétés optiques sont sensibles à ladite substance ou audit paramètre, pour modifier en conséquence, et par l'intermédiaire du réseau optique de diffraction, les propriétés optiques d'une onde circulant dans la fibre.

Toutefois, ce document EP-A-0275275 n'indique aucunement quelle doit être la structure de la fibre, étant simplement précisé qu'elle comporte un réseau de Bragg annulaire.

Or, des difficultés demeurent dans la mise au point de ce type de capteurs, tout particulièrement lorsque la fibre est réalisée avec une partie centrale ou coeur formant guide d'ondes, ce coeur étant entouré par au moins une gaine optiquement conductrice. En pratique, ces difficultés sont notamment liées à la faible proportion de lumière circulant habituellement hors du coeur de la fibre (la proportion de champ évanescent étant jusqu'à présent souvent inférieure à environ 1 %), ou à la fragilisation de la fibre lorsque celle-ci est traitée de manière à présenter un champ évanescent plus important (du fait d'une réduction de diamètre de la fibre, et du coeur en particulier).

En outre, la sélectivité ou sensibilité des capteurs existants ne s'avère pas toujours adaptée. Or, il est souvent délicat de la faire varier.

C'est dans ces conditions que l'invention propose un capteur à fibre(s) optique(s), du type général de celui du brevet EP-A-0275275, dans lequel la fibre comprend un coeur guide d'ondes entouré d'une gaine optiquement conductrice, la couche sélective occupant au moins une portion extérieure de ladite gaine et entourant, à l'endroit du réseau de diffraction, une portion intérieure optiquement neutre de cette même gaine venant en contact du coeur.

De cette manière on va pouvoir obtenir un capteur assurant un compromis (qui pourra évoluer) entre la résistance de la fibre (tenue mécanique du coeur) et la sensibilité du capteur (liée à l'épaisseur de la couche sélective). Et il va donc être possible de jouer sur cette sélectivité, en l'adaptant en fonction des types de détection à effectuer (relevé de température, mesure de la teneur en gaz d'une atmosphère....).

En ce qui concerne la constitution du réseau optique de diffraction, sa constitution peut être obtenue par différentes voies.

On pourrait par exemple choisir de réaliser le réseau, en strates, au niveau de la gaine optique. Dans ce cas il s'agirait plutôt de déposer une matière que de réaliser optiquement ces strates. Des recherches sont en cours.

Toutefois, la solution que propose plus particulièrement l'invention consiste à réaliser ce réseau comme un réseau de Bragg, en le créant optiquement, par exemple par pompage optique. Pour cela on exposera la fibre (et en particulier son coeur) à un champ d'interférence résultant de l'interférence mutuelle de deux faisceaux de radiations ultraviolettes dirigés simultanément vers la fibre suivant différents angles d'incidence aigus par rapport à l'axe longitudinal de la fibre, de telle sorte qu'apparaissent, au moins dans ce coeur, des variations périodiques de l'indice de réfraction. Ainsi, le champ d'interférence présentera, à l'endroit du réseau gravé, des franges ou strates séparées les unes des autres et se propagera transversalement dans la fibre avec un changement (pouvant être permanent si l'intensité du rayonnement est adaptée) de l'indice de réfraction de la zone de création de ces strates, en correspondance avec le champ d'interférence.

Etant donné qu'il est récemment apparu intéressant d'utiliser des composants à fibres optiques permettant d'injecter et/ou d'extraire, si nécessaire sélectivement,la lumière (voir notamment FR-A-2 674 639 ou la demande américaine correspondante US.87 / 058009 du 26 mars 1992), une caractéristique complémentaire de l'invention prévoit qu'avantageusement ces variations périodiques de l'indice local de réfraction seront gravées pour être sensiblement parallèles entre elles et pour présenter une normale faisant un angle α avec l'axe de la fibre, tel que O° < α <90°.

Dans ce cas, pour faire fonctionner la fibre en réflexion, on entourera alors de préférence la gaine par un miroir présentant une surface intérieure concave réfléchissante, dirigée vers la fibre, pour renvoyer vers elle l'onde lumineuse avec laquelle on l'aura éclairée.

Une description plus détaillée de l'invention va maintenant être donnée à titre d'exemple non limitatif, cela en référence aux dessins schématiques d'accompagnement dans lesquels :
la figure 1 est une vue en coupe longitudinale d'un premier type de capteur utilisable conformément à l'invention,
la figure 2 est une vue comparable à celle de la figure 1 montrant une première variante de réalisation,
la figure 3 est, également suivant une vue en coupe identique à celle de la figure 1, une représentation d'une deuxième variante de réalisation,
la figure 4 est une variante de réalisation de la gaine, en vue uniquement de détail correspondant à la partie repérée IV sur la figure 3,
la figure 5 est une vue agrandie en plan montrant une possibilité de réalisation structurelle du miroir notamment de la figure 3 suivant le détail V, et
la figure 6 montre une solution pour créer optiquement les strates.

Sur chacune des trois premières figures est donc illustré le principe d'un capteur intrinsèque à fibre optique, cette fibre pouvant être monomode ou multimode.

Dans ce qui suit, on se limitera, à titre d'exemple et uniquement pour la clarté de l'exposé, au cas d'un capteur de fluide tel qu'un capteur de gaz.

Chaque capteur illustré comprend, sur la base ici d'une fibre optique unique 1, une gaine optique 3, normalement transparente, entourant un coeur 5 transparent, formant guide d'ondes et s'étendant longitudinalement le long d'un axe 7 pour comporter localement des parties 9 présentant des variations d'indice de réfraction (ou d'épaisseur optique) formant ainsi un réseau optique de diffraction.

On rappelera qu'une épaisseur optique δ d'une lame (éventuellement élémentaire) optiquement homogène d'épaisseur e et d'indice de réfraction n est telle que : δ = n x e.

Pour qu'une telle fibre constitue un capteur intrinsèque, une partie au moins de la gaine 3 optiquement conductrice, voire les parties à variation d'indice de réfraction 9, comprend dans sa constitution un matériau organique actif vis-à-vis de la substance à détecter et formant une couche sélective dont les propriétés optiques vont donc varier en fonction de l'évolution du paramètre ou de la substance P (en l'espèce la teneur en gaz), au sein de l'environnement E où est placé le capteur.

Dans les exemples illustrés, les parties précitées à variation d'indice de réfraction sont ici constituées par des zones ou des strates planes parallèles entre elles et périodiques. Ces strates s'étendront de préférence dans le coeur 5 et pourront se poursuivre dans la partie optiquement neutre de la gaine.

On connaît dans la littérature de tels réseaux optiques de diffraction sous l'appellation RESEAU DE BRAGG. La fibre optique décrite dans la demande précitée FR-A-2674639 en est un parfait exemple, la structure de base de cette fibre étant d'ailleurs tout à fait utilisable dans le cadre de l'invention.

Pour toute définition relative à ces réseaux de diffraction (ou de diffusion), on pourra si nécessaire se reporter au "dictionnaire des termes scientifiques et techniques" (Dictionnary of scientifics and technical terms) -Mc Graw-Hill- pages 250 et 825 (voir "Grating") ou au "dictionnaire de physique" de E. Levy (Presse universitaire de France) pages 109 et 685-686.

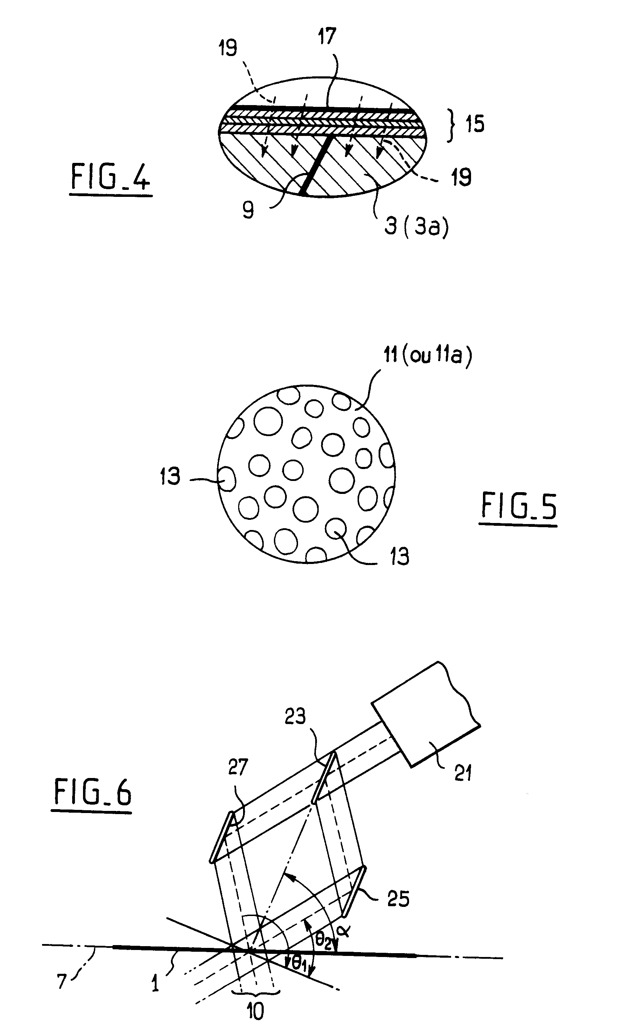

Pour créer le réseau de strates 9, on procédera par voie optique, à partir d'une source LASER 21 (telle qu'une diode LASER) pour transmettre vers la fibre, transversalement à son axe, un faisceau ultraviolet lequel sera séparé en deux ondes que l'on fera converger via deux miroirs 25, 27, sous un certain angle d'incidence (ϑ1 ou ϑ2), vers la fibre (voir figure 6), à l'image de ce qui est proposé (par réseau) au brevet US-4 807 950 ou encore au brevet US-4 867 522.

En tant que matériau organique actif, on pourra en particulier prévoir d'utiliser un hétéropolysiloxane de formule chimique 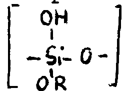
avec notamment R égal CH₃ ou C₂H₅, ce matériau pouvant être déposé en film mince (quelques microns).

Pour assurer la résistance d'ensemble, un enrobage de la fibre par une ou plusieurs gaines mécaniques (par exemple en Kevlar-nom déposé) sera en outre de préférence prévu. Pour ne pas surcharger les figures, aucune gaine mécanique n'a toutefois été représentée.

Après cette présentation globale, intéressons-nous indépendamment à chaque figure.

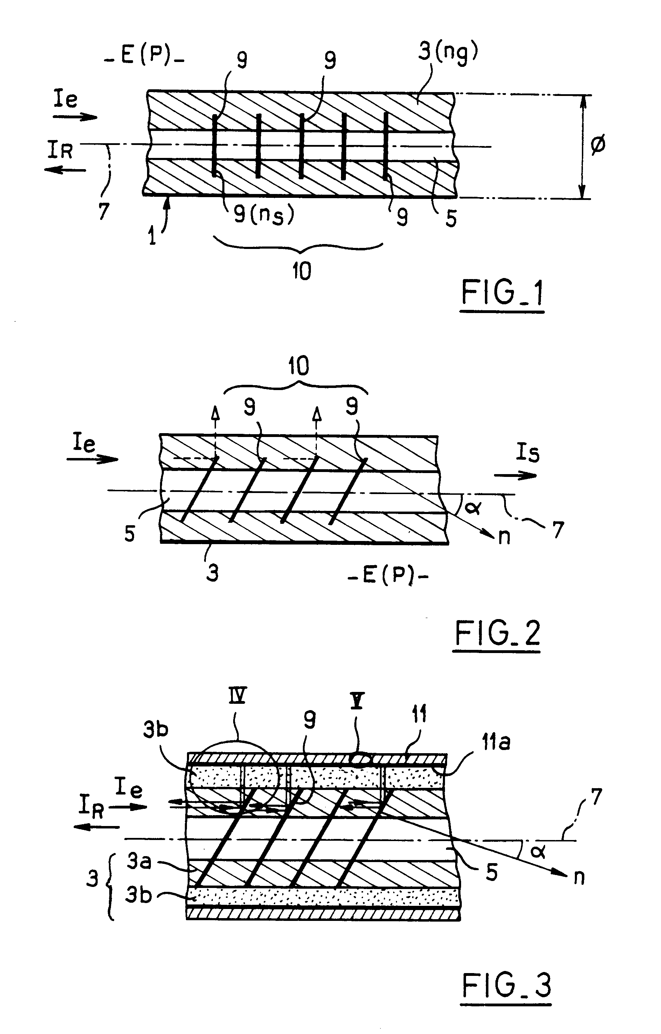

Il faut noter tout d'abord que sur la figure 1, les strates 9 du réseau de Bragg sont ici constituées en ledit matériau actif de manière à être capables d'absorber le gaz à détecter en présentant des caractéristiques optiques, et tout particulièrement des propriétés de réflexion, dépendant de cette concentration en gaz.

Dans l'application retenue, le matériau actif constituant ces strates présentera avantageusement un indice de réfraction nₛ proche de l'indice de réfraction n_{g} de la gaine 3, en l'absence de gaz, la valeur de nₛ s'écartant de n_{g} lorsque la teneur en gaz dans le matériau actif augmentera.

Le réseau de Bragg, quasi transparent en l'absence de gaz, apparaîtra donc après absorption de celui-ci.

Quant à la gaine optique 3, elle pourra, sur une partie de son épaisseur, être réalisée à base dudit matériau actif. Cela étant, elle devra quoi qu'il en soit, de même que la gaine extérieure mécanique de protection, être constituée en une matière "poreuse" ou perméable permettant au gaz à détecter de pénétrer latéralement à l'intérieur du capteur, la fibre pouvant être constituée avec un coeur et une gaine à base du même matériau, la différence d'indices de réfraction existant entre eux pouvant être obtenue, de construction, par dopage du matériau de base de la gaine (habituellement la silice) avec un oxyde métallique (tel que de l'oxyde de Germanium, GeO₂).

Sur la figure 1, on remarquera que les strates 9 parallèles entre elles et périodiques sont inclinées par rapport à l'axe 7 de la fibre avec leur normale parallèle à ce même axe. En d'autres termes les strates sont donc perpendiculaires à l'axe 7.

Ainsi, le réseau adopté fonctionnera en réflexion.

Son principe d'utilisation sera le suivant, que l'on ait affaire à une seule fibre ou à une suite de capteurs placés bout à bout, en série.

Après avoir matérialisé les strates 9 réalisées à base dudit matériau actif noyé périodiquement dans la fibre, de telle manière que ces strates puissent présenter au moins deux états avec des caractéristiques optiques différentes en présence et en l'absence de gaz, on transmettra axialement, vers la fibre considérée, et à partir d'une de ses extrémités, une intensité lumineuse incidente Iₑ ayant au moins une longueur d'onde correspondant à une longueur d'onde λᵣ de résonance du réseau optique pour que ce dernier réfléchisse une lumière ayant comme longueur d'onde λᵣ.

Parallèlement, on mesurera l'intensité lumineuse Iᵣ réfléchie par la fibre à cette longueur d'onde λᵣ.

On comparera ensuite les intensités lumineuses Iₑ et Iᵣ, leur rapport (en général Iᵣ/Iₑ) étant représentatif de la variation du paramètre P analysé, et donc en l'espèce de la présence du gaz à détecter, voire de sa concentration, dans la mesure où l'intensité réfléchie Ir augmentera avec la concentration en gaz.

L'exemple de la figure 2 se différencie de celui de la figure 1 essentiellement en ce qu'ici les strates 9 du réseau optique sont disposées avec leur normale inclinée d'un angle α par rapport à l'axe 7 de la fibre, tel que 0°<α<90°.

Dans ce cas, au lieu donc de mesurer l'intensité lumineuse réfléchie, on mesurera au contraire, à l'extrémité opposée de la fibre, l'intensité de sortie Iₛ après que la lumière ait donc traversé axialement le capteur considéré sur toute sa longueur.

Et pour pouvoir effectuer ces mesures, on transmettra axialement vers cette fibre une intensité lumineuse incidente Iₑ avec au moins une longueur d'onde prédéterminée, choisie pour rendre apparentes les strates 9 en fonction de leur signature chromatique, celles-ci représentant, compte tenu de la constitution du réseau optique arrêté, une absorption quasi-sélective.

Bien entendu, dans ce cas, plus la concentration en gaz augmentera dans le capteur, plus l'intensité Iₛ diminuera, ceci pour une intensité incidente Iₑ supposée constante, les propriétés de réflexion des strates allant croissantes, de même que la différence entre les indices de réfraction nₛ de ces dernières et n_{g} de la gaine 3.

Voyons maintenant le cas de la figure 3 pour noter que la fibre optique est ici complétée sur une partie au moins de la périphérie de la gaine par un miroir cylindrique de section circulaire 11 dont le rôle va être mieux compris ci-après , la gaine étant ici elle-même "divisée" en une partie intérieure 3a, adjacente au coeur 5, réalisée en un matériau "non actif" neutre optiquement, c'est-à-dire non sensible au gaz à détecter (par exemple en silice dopée) et une partie extérieure active 3b (hétéropolysiloxane notamment) qui l'entoure, au moins au niveau des strates 9, et dont on va utiliser essentiellement les propriétés de variation de transparence en fonction de la teneur en gaz. A titre d'exemple, pour une fibre présentant un coeur avec un diamètre de l'ordre de quelques microns, voire quelques dizaines de microns, l'épaisseur radiale de la couche 3a pourra représenter également quelques microns, en général moins de 10 microns. Une épaisseur de quelques dixièmes de microns peut même être envisagée. Quant à la couche sélective 3b, son épaisseur pourra être de quelques microns.

Concernant le miroir, sa surface intérieure concave réfléchissante 11a venant au contact de la surface extérieure de la couche sélective 3b pourra par exemple être obtenue par dépôt en couche mince d'un matériau tel que de l'or, de l'argent ou de l'aluminium.

Comme illustré figure 4, le miroir 11 dans son ensemble présentera avantageusement, au moins en regard du réseau 10, une structure lacunaire avec des orifices 13, pour se laisser traverser par la substance à détecter. Un matériau poreux à cette substance sera ainsi utilisé avec des tailles de trous 13 de préférence nettement inférieures à la longueur d'onde du signal transmis dans la fibre (par exemple λ/10).

On aurait également pu réaliser la gaine 3 en matériau non actif et l'entourer, comme sur la figure 5, d'un miroir diélectrique multicouches 15, éventuellement poreux à l'image du miroir 11 (voir flèches 19 de la figure 4) et ayant au moins sa couche externe 17 qui présente une épaisseur optique variant en fonction de la teneur en gaz de l'environnement (E). Ceci étant, le résultat aurait été comparable, la gaine 3 et les couches intérieures du miroir 15 jouant alors le rôle de la partie optiquement neutre 3a, et la couche externe 17 remplaçant la couche sélective 3b.

Quant au réseau optique, on aura remarqué que ses strates 9 sont, comme sur la figure 2, orientées pour que leur normale présente un angle α (0°< α <90°) par rapport à l'axe 7 de la fibre, les strates s'interrompant ici à la frontière entre les parties 3a et 3b de la gaine.

Pour que le capteur fonctionne efficacement, son réseau résonnera sensiblement autour d'une longueur d'onde λᵣ déterminée, connue.

Une fois cela réalisé, on pourra transmettre axialement dans la (les) fibre(s), toujours à une extrémité, une intensité lumineuse incidente Iₑ ayant comme, ou parmi ses, longueur(s) d'onde ladite longueur d'onde λᵣ de résonance.

Le flux lumineux sera alors extrait de la fibre par le réseau et réfléchi par le miroir 11 (ou 15) pour être ainsi réinjecté dans la fibre considérée.

Lorsque du gaz sera présent dans le matériau actif de la couche sélective, et que la longueur d'onde utilisée correspondra aux longueurs d'onde d'absorption du gaz, la lumière présente dans ce matériau (et donc en contact avec le gaz) sera ainsi absorbée, provoquant une baisse d'intensité réfléchie Iᵣ.

Ainsi, en présence de gaz, l'intensité de l'absorption sera fonction de la longueur du réseau 10, de la quantité de gaz captée, ainsi que de l'épaisseur de la zone renfermant le matériau actif.

Avec une telle construction, on pourra notamment obtenir un capteur ou une série de capteurs sélectif(s).

En effet, si les strates 9 sont elles-mêmes réalisées avec ledit matériau actif et que l'on transmet vers ladite fibre une lumière multichromatique (par exemple une lumière blanche), le réseau sélectionnera alors lui-même la longueur d'onde λᵣ de résonance qu'il réfléchira, cette longueur d'onde correspondant à la raie d'absorption du gaz capté, l'analyse s'effectuant, comme dans le cas de la figure 1, par relevé des intensités lumineuses incidente (Ie) et réfléchie (Ir) avec comparaison entre elles.

Si par contre les strates du réseau de Bragg ne sont pas réalisées à base du matériau actif, alors on transmettra dans cette fibre, une lumière monochromatique recouvrant la longueur d'onde de résonance de ce réseau ainsi que la raie d'absorption du gaz à détecter, la sélectivité étant ainsi, dans ce cas, effectuée "d'entrée" par l'opérateur.

D'une façon générale, en tant que moyens de mesure des intensités lumineuses on pourra utiliser un photomultiplicateur, un détecteur photoconductif, ou une photodiode éventuellement à avalanche. Dans ces quatre possibilités, la photodiode est la plus courante. Elle équipe la plupart des réflectomètres utilisés pour mesurer le flux lumineux réfléchi (Iᵣ). L'intensité lumineuse incidente (Iₑ) est normalement fournie par le constructeur de l'appareil. Sa valeur peut de toutes façons être vérifiée par l'un des moyens de mesure précités.

Un autre procédé de mesure pourrait d'ailleurs consister à mesurer par une méthode connue de réflectrométrie l'intensité lumineuse (Ir) réfléchie par le ou la série de capteur(s). Pour toute information concernant une telle méthode, on pourra se reporter notamment à la revue "Opto n° 63 - Septembre/Octobre 1991" relative aux mesures sur les réseaux à fibres optiques. Les publications suivantes renseigneront également le lecteur : "Principes de mesures de fibres optiques" (Principles of optical fibers measurements - Academic Press Inc., 111 Fifth Avenue, New York) et "La mesure des pertes optiques en retour par utilisation de la technique de réflectométrie" (Very high optical return-loss measurement using OTDR technique - Symposium on Optical Fiber Measurements, Boulder, Colorado, 11-12 September 1990)

Bien entendu, même si ces méthodes d'enregistrement d'un flux lumineux réfléchi paraissent séduisantes, la solution consistant à adopter une structure de fibre comparable à celle des figures 3 à 5, avec ou sans miroir et avec des strates perpendiculaires à l'axe de cette fibre, pourrait être retenue et ne sort, de toutes façons, aucunement du cadre de l'invention.

## Revendications

**1 -**Capteur à fibre(s) optique(s) pour la détection d'un paramètre physique ou chimique ou d'une substance, à l'aide de l'association d'au moins une couche sélective (3b, 9) disposée sur une surface de la fibre et d'un réseau optique de diffraction (10) dont cette même fibre est pourvue, ladite couche sélective comprenant, dans sa constitution, un matériau organique optiquement conducteur dont les propriétés optiques sont sensibles à ladite substance ou audit paramètre, pour modifier en conséquence, et par l'intermédiaire dudit réseau optique de diffraction, les propriétés optiques d'une onde circulant dans la fibre, caractérisé en ce que la fibre comprend un coeur guide d'ondes (5) entouré d'une gaine (3) optiquement conductrice, ladite couche sélective occupant au moins une portion extérieure (3b,17) de ladite gaine et entourant, à l'endroit dudit réseau, une portion intérieure (3a) optiquement neutre de cette même gaine venant en contact du coeur.

**2 -** Capteur selon la revendication 1 caractérisé en ce que ledit réseau optique de diffraction s'étend dans ladite gaine optiquement conductrice (3).

**3 -** Capteur selon la revendication 1 caractérisé en ce que le réseau optique de diffraction consiste en un réseau de réfraction de Bragg créé optiquement, en exposant la fibre à un champ d'interférence résultant de l'interférence mutuelle de deux faisceaux de radiation ultraviolette dirigés simultanément vers la fibre, transversalement à l'axe de cette dernière, suivant des angles d'incidence différents, de telle manière qu'apparaissent dans la fibre des variations périodiques (9) de l'indice de réfraction.

**4 -** Capteur selon la revendication 3 caractérisé en ce que lesdites variations périodiques de l'indice de réfraction constituent des strates (9) sensiblement parallèles entre elles et dont la normale fait un angle α avec l'axe (7) de la fibre, tel que 0°< α <90°.

**5 -** Capteur selon la revendication 3 caractérisé en ce que lesdites variations périodiques de l'indice de réfraction constituent des strates (9) sensiblement parallèles entre elles et dont la normale est parallèle à l'axe (7) de la fibre.

**6 -** Capteur selon l'une quelconque des revendications précédentes caractérisé en ce que ladite couche sélective comporte un matériau organique optiquement conducteur, tel qu'un hétéropolysiloxane.

**7 -** Capteur selon la revendication 6 caractérisé en ce que ledit matériau organique est déposé sur ladite portion interne (3a) de la gaine optiquement conductrice (3) pour y former un film mince constituant ladite couche sélective.

**8 -** Capteur selon la revendication 6 caractérisé en ce que ledit matériau organique est déposé en film mince au moins dans le coeur (5) de la fibre pour y constituer les strates du réseau optique de diffraction, l'indice de réfraction de ces strates évoluant en fonction des variations dudit paramètre ou de ladite substance contenue dans l'environnement au sein duquel est placé le capteur.

**9 -** Capteur selon l'une quelconque des revendications précédentes caractérisé en ce que ladite gaine optiquement conductrice (3) est entourée par un miroir (11,17) présentant une surface interne concave réfléchissante, dirigée vers la fibre pour renvoyer vers l'intérieur de cette fibre une onde lumineuse qui en a été extraite.

**10 -** Capteur selon la revendication 9 caractérisé en ce que ledit miroir (11,17) qui entoure la gaine présente, au moins en regard dudit réseau optique de diffraction, une structure lacunaire (13) pour se laisser traverser par ladite substance ou ledit paramètre à détecter.
